# EUROPÄISCHE PATENTANMELDUNG

(11) **EP 0 887 568 A1**
(43) Veröffentlichungstag der Anmeldung: **30.12.1998**
(21) Anmeldenummer: 98110951.5
(22) Anmeldetag: 16.06.1998
(51) Int. Cl.: F16C 33/76

(54) **Lager, insbesondere für eine Spannvorrichtung**

(30) Priorität: 26.06.1997 DE 29711143 U
(71) Anmelder: Sachsenring Entwicklungsgesellschaft mbH, 08058 Zwickau (DE)
(72) Erfinder: Blechschmidt, Helge, Dipl.-Ing., 08141 Reinsdorf (DE)
(74) Vertreter: Hufnagel, Walter, Dipl.-Ing., Dipl.-Wirtsch.-Ing.

(57) **Zusammenfassung**

Ein Lager (1), bei dem ein Lagerinnenteil (2) und ein dieses umgebendes Lageraußenteil (5) vorgesehen ist, soll so verbessert werden, daß das Material der Lagerabdeckung keine wesentlichen Belastungen aushalten muß. Dies wird dadurch erreicht, daß am Deckel (8) ein zum Lageraußenteil (5) hin gerichteter und zur Lagerachse (10) koaxialer Ringflansch (17) vorgesehen ist und daß der Lageraußenteil (5) eine zur Lagerachse (10) koaxiale Aussparung (18) besitzt, in die der Ringflansch (17) des Deckels (8) dichtend einsetzbar ist.

## Beschreibung

Die vorliegende Erfindung bezieht sich auf ein Lager, insbesondere für eine Spannvorrichtung, gemäß dem Oberbegriff des Anspruchs 1.

Ein derartiges Lager ist aus der EP 0694703 A1 bekannt. Bei diesem Lager ist auf dem Außenring eines Kugellagers ein Lageraußenteil angebracht, das im gleichen Abstand voneinander entfernt, radiale Stege besitzt. Die Lagerstirnseite ist von einer Kappe abgedeckt, die axial verlaufende, zur Zentralachse des Lagers federnd auslenkbare hakenförmig ausgebildete Rastlaschen aufweist. Beim Aufstecken der Kappe auf die Stirnseite des Lagers greifen die radialen Stege in je einen Zwischenraum zwischen zwei Stegen des Lageraußenteils ein und verrasten mit einem radial nach innen abstehenden Raststeg des Lageraunenteils. Die Kappe besitzt weiterhin einen ringförmigen, winkelförmigen Halteansatz, dessen axial verlaufende Wandfläche von außen über eine Kante eines Befestigungskragens des Lageraußenteils greift und dessen radial verlaufende Wandfläche sich gegen eine entsprechende Fläche des Lageraußenteils abstützt.

Aus dem DE 9320478 U1 ist weiterhin ein Lager bekannt, dessen Lageraußenteil eine zur Lagerachse konzentrische äußere Umfangsfläche besitzt. Auf diese Umfangsfläche ist der nach Art eines Dosendeckels ausgebildete Deckel mit seinem axial abstehenden Deckelrand dichtend aufsteckbar. Diese Anordnung beruht auf dem gleichen Prinzip, wie vorstehend aus der EP 0694703 A1 bekannt. Um hier einen dauerhaften festen Sitz des Deckels und eine zuverlässige Abdichtung und Sicherheit gegen Verdrehen zu gewährleisten, muß dieser Deckel unter Vorspannung des Deckelrandes mit hoher radialer Klemmwirkung aufgebracht sein. Durch die dabei auftretenden Spannungen im Deckelrand kann dieser Deckel bereits bei der Montage einreißen oder es können Risse entstehen, wenn der Kunststoff des Deckels altert und/oder spröde wird.

Bei einer aus der DE 2715416 A1 bekannten Anordnung eines Deckels besitzt ein Wälzlageraußenring eine umlaufende Ausnehmung für einen Dichtring. Der Dichtring seinerseits besitzt eine umlaufende Nut, in die eine Abdeckkappe mit einem an dieser vorgesehenen umlaufenden Rand eingeschnappt ist. Hier muß also bei der Herstellung des Außenrings eine umlaufende Nut eingestochen und/oder eingeschliffen werden. Dies verteuert die Herstellungskosten. Außerdem muß der Dichtring zusätzlich montiert werden, was die Montagekosten erhöht. Schließlich wird die Abdeckkappe mit ihrem Rand angedrückt und eingeschnappt. Dies ist mit einer erheblichen Deformierung der Abdeckkappe zumindest in ihrem Randbereich verbunden. Das Einschnappen dieses Randes ist daher relativ kritisch und störanfällig. Zusätzlich muß ein Material verwendet werden, das einerseits die elastische Verformung bei der Montage aushalten und andererseits eine ausreichende Festigkeit besitzen muß, um die geforderten Funktionen erfüllen zu können. Ein solches Material ist in der Regel relativ teuer und vielfach auch schwierig zu verarbeiten.

Schließlich ist es aus der Gebrauchsmusterschrift DE 29609380 U1 bekannt, am Außenring eines Wälzlagers eine Ringnut vorzusehen, also einzustechen und/oder einzuschleifen, in die ein ringförmiger Radialvorsprung eines zylindrischen Fortsatzes der Abdeckkappe einschnappt. Auch hier muß also eine zusätzliche Maßnahme, nämlich eine kostenaufwendige Ringnut vorgesehen werden. Die Abdeckkappe muß auch hier aus einem Material mit ausgeprägten elastischen Eigenschaften bestehen, um die Dehnungskräfte beim Aufschnappen auf den Außenring aufnehmen zu können. Trotzdem kann es zu einem späteren Zeitpunkt durch Alterung des Kunststoffs, wie durch Schrumpfen oder Erhärten desselben, zu Rissen kommen. Um einen festen Sitz der Abdeckkappe zu gewährleisten, sind an dem Radialvorsprung zusätzlich, am Umfang desselben verteilt, drei kleinvolumige Sicherungsvorsprünge angebracht. Diese werden beim Aufschnappen fest angepreßt und dabei deformiert. Hierdurch soll eine überdurchschnittlich starke Flächenpressung erhalten werden. Das Material dieser Abdeckkappe wird daher sehr stark auf Dehnung beansprucht.

Mit der vorliegenden Erfindung soll die Aufgabe gelöst werden, ein Lager mit einer kostengünstigen Lagerabdeckung zu schaffen, wobei das Material der Lagerabdeckung keine wesentlichen Belastungen, insbesondere Dehnbelastungen, aushalten muß.

Gelöst wird diese Aufgabe durch die Merkmale des Anspruchs 1.

Erfindungsgemäß ist am Lageraußenteil kein überstehender, engtolerierter Befestigungsteil mehr vorhanden, der beispielsweise beim Herunterfallen des Lagers infolge des relativ großen Gewichts des Lagers oder durch Scherbeanspruchungen beschädigt werden kann, so daß das Aufsetzen der Kappe unter Umständen gänzlich unmöglich wäre. In diesem Fall wäre ein sowohl arbeitsseitig als auch materialseitig teuerer Ersatz des Lageraußenteils notwendig. Träte ein solcher Fall beim erfindungsgemäß ausgebildeten Lager auf, so wäre dort lediglich der Deckel kostengünstig durch einen anderen Deckel zu ersetzen.

Weitere vorteilhafte Einzelheiten der Erfindung sind in den Unteransprüchen angegeben und werden nachfolgend anhand eines in der Zeichnung dargestellten Ausführungsbeispiels näher beschrieben. Es zeigen:
- Fig. 1: ein Lager mit abgenommenem Deckel,
- Fig. 2: den Deckel gemäß Fig. 1 von der Unterseite und
- Fig. 3: den in Fig. 1 eingezeichneten kreisförmigen Ausschnitt in vergrößertem Maßstab.

Das Lager 1 besteht aus zwei nebeneinander angeordneten, beispielsweise als Kugellager ausgebildeten Wälzlagern mit je einem Innenring 2, Wälzlagerkugeln 3 und je einem Außenring 4. Es kann bei Bedarf auch nur ein einziges Wälzlager vorgesehen sein. Anstelle des dargestellten Wälzlagers kann auch ein Nadellager, Kegellager oder Tonnenlager vorgesehen sein.

Mit Vorteil kann die Erfindung auch für ein Gleitlager angewendet werden.

Die Außenringe 4 sind mit einem Lageraußenteil 5 umspritzt oder sonst in geeigneter Weise mit diesem fest, insbesondere kraftschlüssig verbunden. Der Lageraußenteil 5 bildet beim dargestellten Ausführungsbeispiel eine Spannrolle für eine Spannvorrichtung, beispielsweise für einen Ketten- oder Riementrieb. Die Innenringe 2 dienen zur Aufnahme eines gestrichelt eingezeichneten Lagerzapfens 6 mit der Lagerachse 10.

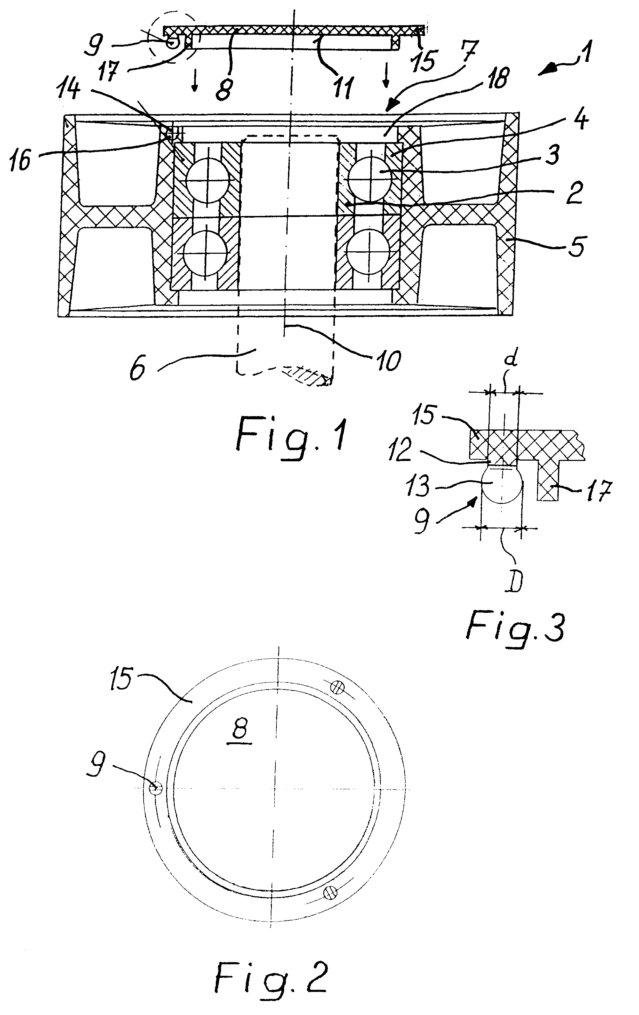

Die offene Lagerabschlußseite 7 ist durch einen Deckel bzw. eine Abdeckkappe 8 dicht abschließbar. Hierzu besitzen der Deckel bzw. die Abdeckkappe 8 an dessen bzw. an deren Umfang verteilt beispielsweise drei Schnappelemente 9, die in Richtung der Lagerachse 10, also axial, von der Deckelunterseite 11 nach unten abstehen. Die Schnappelemente 9 besitzen beim Ausführungsbeispiel die Form eines Kugelzapfens mit einem Zapfensteg 12 mit kleinerem Durchmesser d als der Durchmesser D des als Kugel ausgebildeten Zapfenabschnitts 13 (vgl. Fig. 3). Anstelle eines Kugelzapfens kann auch jede andere Zapfenausgestaltung Anwendung finden, die einen Zapfensteg 12 mit endseitig nach außen überstehendem Zapfenabschnitt oder Zapfenabschnitten 13 besitzt. Diese Zapfenabschnitte 13 können beispielsweise warzenförmig, hakenförmig oder dgl. ausgebildet sein.

Die Schnappelemente 9 sind in Gegenschnappelemente 14 des Lageraußenteils 5 einschnappbar bzw. eingeschnappt. Die Gegenschnappelemente 14 sind in gleicher Anordnung und Verteilung wie die Schnappelemente 9 und ebenfalls axial verlaufend angeordnet. Beim Aufschnappen des Deckels 8 liegt der Deckelrand 15 auf dem Lageraußenteil 5 vorzugsweise dicht auf. Durch die Anwendung einzelner Schnappelemente 9, wie Zapfen, ist der Deckel 8 verdrehungssicher angebracht und durch die axiale Anordnung der Schnappelemente 9 und der Gegenschnappelemente 14 wird das Material des Deckels 8 nicht auf Dehnung beansprucht. Es kann daher für den Deckel 8 ein kostengünstiges Material ausgewählt werden. Auch entfallen irgendwelche Zusatzarbeiten an den Lagerteilen.

Die Gegenschnappelsmente 14 sind als in axialer Richtung vorgesehene Bohrungen oder als Sacklöcher ausgebildet und besitzen wenigstens eine Hinterschneidung 16, in die die Zapfenabschnitte 13 rastend einschnappen können. Die Konstruktion und Anordnung der Schnappelemente 9 und der Gegenscbnappelemente 14 ist derart gewählt, daß im eingeschnappten Zustand der Deckelrand 15 möglichst eng, insbesondere dichtend, am Lageraußenteil 5 anliegt. Der Querschnitt der Bohrung der Gegenschnappelemente 14 kann rund, oval, mehreckig oder in sonst geeigneter Weise ausgeführt sein. Auch müssen die Hinterschneidungen 16 der Gegenschnappelemente 14 nicht genau an die Form der Zapfenabschnitte 13 angepaßt sein.

Falls der Deckelrand 15 nicht oder nicht ausreichend dicht am Lageraußenteil 5 anliegt - oder auch wenn dieser dort dicht anliegt - kann zusätzlich, ein in axialer Richtung von der Deckelunterseite 11 abstehender, zur Lagerachse 10 koaxialer Ringflansch 17 vorgesehen sein. Dieser Ringflansch 17 erstreckt sich beim Aufschnappen des Deckels 8 dichtend in eine zur Lagerachse 10 koaxiale Aussparung 18 des Lageraußenteils 5.

Anstelle der Ausgestaltung des Lageraußenteils 5 als Spannvorrichtung, insbesondere als Spannrolle, kann der Lageraußenteil 5 auch als Laufrolle, Zahnrad, Lagerbock oder dgl. ausgebildet sein.

## Patentansprüche

1. Lager (1), insbesondere für eine Spannvorrichtung, bei dem ein Lagerinnenteil (2) und ein dieses umgebendes Lageraußenteil (5) vorgesehen ist und diese Lagerteile (2, 5) relativ zueinander drehbar sind und bei dem die offene Lagerabschlußseite (7) durch einen mit dem Lageraußenteil (5) verrastbaren Deckel (8), dessen Deckelrand am Lageraußenteil (5) anliegt, abgedichtet ist, wobei mehrere an der Deckelunterseite (11) verteilt angeordnete und am Deckel (8) axial, also in Richtung der Lagerachse (10), abstehend ausgerichtete Schnappelemente (9) vorgesehen sind, die mit am Lageraußenteil (5) entsprechend der Verteilung der Schnappelemente (9) angeordneten und ebenfalls axial abstehend ausgerichteten Gegenschnappelementen (14) derart zusammengeschnappt oder zusammenschnappbar sind, daß der Deckelrand (15) am Lageraußenteil (5) anliegt und der Deckel (8) gegenüber dem Lageraußenteil (5) gegen Verdrehen gesichert ist, dadurch gekennzeichnet, daß am Deckel (8) ein zum Lageraußenteil (5) hin gerichteter und zur Lagerachse (10) koaxialer Ringflansch (17) vorgesehen ist und daß der Lageraußenteil (5) eine zur Lagerachse (10) koaxiale Aussparung (18) besitzt, in die der Ringflansch (17) des Deckels (8) dichtend einsetzbar ist.

2. Lager nach Anspruch 1, dadurch gekennzeichnet, daß die Schnappelemente (9) als Zapfen (10) mit endseitig nach außen abstehendem Zapfenabschnitt (13) ausgebildet sind.

3. Lager nach Anspruch 2, dadurch gekennzeichnet, daß die Zapfenabschnitte (13) als Kugel ausgebildet sind, deren Durchmesser (D) größer ist als der Durchmesser (d) der Zapfenstege (12).

4. Lager nach einem der Ansprüche 1 bis 3, dadurch gekennzeichnet, daß die Gegenschnappelemente (14) als Bohrung oder als Sackloch mit einer Hinterschneidung (16) ausgebildet sind.

5. Lager nach Anspruch 4, dadurch gekennzeichnet, daß die Hinterschneidungen (16) der Form der Zapfenabschnitte (13) angepaßt sind.

6. Lager nach einem der Ansprüche 1 bis 5, dadurch gekennzeichnet, daß der Lageraußenteil (5) als Rolle, insbesondere als Spannrolle einer Spannvorrichtung für einen Kettentrieb oder einen Riementrieb, ausgebildet ist.

7. Lager nach einem der Ansprüche 1 bis 6, dadurch gekennzeichnet, daß es als Wälzlager ausgebildet ist und der Lageraußenteil (5) mit dessen Außenring (4) kraftschlüssig verbunden ist.
